# EUROPÄISCHE PATENTSCHRIFT

(11) **EP 1 936 226 B1**
(45) Veröffentlichungstag und Bekanntmachung des Hinweises auf die Patenterteilung: **28.10.2009**
(21) Anmeldenummer: 07021232.9
(22) Anmeldetag: 31.10.2007
(51) Int. Cl.: F16D 65/12

(54) **Bremsscheibenring mit Perforationsbohrungen**
Brake disc ring with perforation drillholes
Anneau de frein à disque avec alésages de perforation

(30) Priorität: 20.12.2006 DE 102006060293
(43) Veröffentlichungstag der Anmeldung: 25.06.2008
(73) Patentinhaber: AUDI AG, 85045 Ingolstadt (DE); Dr. Ing. h.c. F. Porsche Aktiengesellschaft, 70435 Stuttgart (DE)
(72) Erfinder: Rosenlöcher, Jens, 86161 Augsburg (DE); Sieber, Heino, 85051 Ingolstadt (DE); Renz, Ralph, 71069 Sindelfingen (DE); Bauer, Moritz, 86199 Augsburg (DE)
(74) Vertreter: Asch, Konrad

(56) Entgegenhaltungen:
- DE-A1- 2 901 349
- GB-A- 2 309 273
- US-A- 5 501 306

## Beschreibung

Die Erfindung betrifft Bremsscheibenringe mit Perforationsbohrungen, Bremsscheiben, die Bremsscheibenringe mit Perforationsbohrungen umfassen, und diese enthaltende Bremssysteme.

Bremsscheiben für Scheibenbremsen werden insbesondere in leistungsstarken Fahrzeugen mit Perforationsbohrungen in den Reibflächen (äußeren Deckflächen) der zylinderringförmigen Bremsscheiben ausgeführt. Im Fall von massiven Bremsscheiben erstrecken sich die Bohrungen üblicherweise durch die gesamte Scheibendicke, im Fall von innenbelüfteten Bremsscheiben können sie auch lediglich von der Reibfläche bis zum inneren Hohlraum reichen. Der Vorteil dieser Perforationsbohrungen besteht in einer verbesserten Kühlung und in einem schnelleren Abbau eines bei Nässe auf den Reibflächen vorhandenen Feuchtigkeitsfilms gegenüber unperforierten Bremsscheiben(ringen). Ein weiterer Vorteil perforierter Bremsscheiben(ringe) ist die Reinigungswirkung der Perforationsbohrungen für den auf den Bremsklötzen angebrachten Reibbelag. Verschleißpartikel werden durch die Perforationsbohrungen zumindest teilweise abgeführt, und durch die Scher- und Schälwirkung der Kanten der Perforationsbohrungen wird eine "saubere" Reibbelagsfläche ohne Ablagerungen von Abrieb und ähnlichen Teilchen erzeugt.

Im Vergleich zu unperforierten Bremsscheiben(ringen) führt dies zu konstantem Reibverhalten auch bei hohen Beanspruchungen.

Im Rahmen dieser Anmeldung bedeutet Bremsscheiben(ring) einen Bremsscheibenring oder eine einen Bremsscheibenring umfassende Bremsscheibe. Dabei wird auch eine einstückige Bremsscheibe als einen Bremsscheibenring umfassend angesehen.

Aus der DE 29 01 349 A ist eine metallische Bremsscheibe mit verringerter Neigung zum Quietschen und verbesserter Wärmeabstrahlung bekannt, in deren Reibflächen Öffnungen ausgebildet sind, die in der Umfangsrichtung unterschiedliche Abstände voneinander aufweisen. Dabei sind die Öffnungen gemäß den Zeichnungen lediglich in dem von den als "Bremskörper" bezeichneten mit Reibbelägen (Bremsbelägen) versehenen Bremsbacken überstrichenen Bereich angebracht.

Das deutsche Gebrauchsmuster DE 74 41 560 betrifft eine Scheibenbremse mit gelochter (perforierter) Bremsscheibe für Zweiradfahrzeuge, wobei durch die Lochung die Beeinträchtigung der Bremswirkung durch auf die Bremsscheibe gelangtes Wasser ausgeschlossen werden soll. Dabei werden Lochreihen innerhalb der von den Reibbelägen der Bremsbacken überstrichenen Ringfläche angeordnet.

In dem deutschen Gebrauchsmuster DE 70 11 084 ist ebenfalls eine Bremsscheibe mit Ausnehmungen beschrieben, die die Bremsscheibe teilweise oder ganz durchsetzen, wobei die Ausnehmungen in den mit den Reibbelägen der Bremse in Reibschluss gelangenden Teilen der Reibfläche angeordnet sind.

In der Offenlegungsschrift DE 22 57 176 A sind innenbelüftete Scheibenbremsen beschrieben, die zwei mit parallelem Abstand verlaufende Scheiben umfassen, wobei diese Scheiben mit Querrippen verbunden sind, und Ausnehmungen in den Bremsflächen in der Nähe der Querrippen verlaufen. Die Öffnungen sind konisch ausgebildet, wobei der geringere Durchmesser auf der Reibflächenseite der Scheiben liegt.

Aus der US-Patentschrift 5,501,306 ist eine Bremsscheibe bekannt, die einen Bremsscheibenring ("brake ring") mit einer Vielzahl von Öffnungen oder Löchern enthält, wobei diese Öffnungen oder Löcher stets entlang eines Radius in dem Bremsscheibenring angeordnet sind. Der Bremsscheibenring ist bis auf die Löcher massiv ("a solid brake ring"), er weist also insbesondere keine Kühlkanäle im Inneren auf. Der Zweck des Einbringens der Löcher ist die Reduzierung des Gewichts der Bremsscheibe.

Aus der US-Patentschrift 6,279,697 B1 ist eine Bremsscheibe bekannt, deren als Reibfläche wirkende Oberfläche durch nicht gerichtete Einbuchtungen strukturiert ist, die durch elektrische Entladungen und das dadurch verursachte Verdampfen von Metall an den betreffenden Stellen erzeugt werden. Auch hier werden ansonsten massive Bremsscheiben derart bearbeitet. Die durch die Oberflächenbearbeitung erzeugten gerichteten (radial oder konzentrisch zum Umfang) Strukturen auf der Reibfläche ergeben Geräusche während des Bremsvorgangs, oder führen zu verstärkter Abnutzung der Bremsbeläge.

Aus der deutschen Offenlegungsschrift 101 57 995 A1 schließlich ist eine Bremsscheibe aus einem faserverstärkten Werkstoff mit Perforationsbohrungen und radialen oder evolventenförmigen Kühlkanälen bekannt. Die Perforationsbohrungen begünstigen die Kühlung der Bremsscheibe und verbessern das Nassansprechverhalten der Bremse, da Wasser und beim Bremsvorgang entstehender Wasserdampf durch die Perforationsbohrungen von der Oberfläche der Bremsscheibe entweichen können.

Bei den dieser Erfindung zugrundeliegenden Untersuchungen wurde gefunden, dass besonders günstige Ergebnisse bei solchen Bremsscheiben erhalten werden, die Perforationsbohrungen aufweisen, deren Symmetrieachsen bevorzugt im wesentlichen parallel zur Rotationsachse der Bremsscheibe sind und damit senkrecht zur Ebene der Reibflächen, und bei denen bevorzugt eine innenbelüftete Bremsscheibe eingesetzt wird, die aus mindestens drei Schichten besteht, wobei die beiden äußeren Schichten als Reibschichten beim Bremsvorgang im tribologischen Kontakt mit den Reibbelägen der Bremsklötze stehen, und die innerste Schicht aus Rippen besteht, die die beiden nach außen anschließenden Schichten verbinden, und die Kühlkanäle einschließen. In bevorzugter Weise ist zwischen den äußeren Schichten und der innersten Schicht jeweils eine weitere Schicht angeordnet, die bevorzugt dieselbe stoffliche Zusammensetzung wie die Rippen aufweist und die Reibschichten mit der innersten Schicht verbindet, wobei diese weiteren Schichten insbesondere die Aufgabe übernehmen, die mechanische Stabilität der Bremsscheibe zu gewährleisten. Dabei wurden besonders günstige Ergebnisse hinsichtlich der thermischen und mechanischen Beanspruchung der Bremsscheibe insbesondere im Bereich der Reibschichten erhalten, wenn Perforationsbohrungen auch außerhalb des von den Reibbelägen der Bremsklötze beim Bremsvorgang überstrichenen Bereichs der Oberfläche eingebracht werden, und wenn sämtliche Perforationsbohrungen von ihren nächsten Nachbarn einen Abstand aufweisen, der stets höchstens 30 mm und mindestens das Doppelte des mittleren Bohrungsdurchmessers beträgt. Als mittlerer Bohrungsdurchmesser wird hier jeweils der Mittelwert des Durchmessers der beiden bei der Bestimmung des Abstandes betrachteten Bohrungen bezeichnet.

Gegenstand der Erfindung sind daher Bremsscheibenringe und diese umfassende Bremsscheiben, die Perforationsbohrungen bevorzugt senkrecht zur Ebene der Reibflächen aufweisen, wobei die Perforationsbohrungen von ihren nächsten Nachbarn jeweils einen Abstand aufweisen, der stets höchstens 30 mm und im Mittel mindestens das Doppelte des mittleren Bohrungsdurchmessers beträgt. Dabei sind auch Perforationsbohrungen außerhalb des von den Bremsklötzen überstrichenen Bereichs eingebracht, bevorzugt ist mindestens ein Anteil von 5 % aller Perforationsbohrungen außerhalb des überstrichenen Bereichs.

Ein weiterer Gegenstand der Erfindung sind Bremssysteme, die Bremsklötze und derartige Bremsscheibenringe befestigt an einem sogenannten Topf enthalten, wobei der Topf die kraftschlüssige Verbindung zwischen dem Bremsscheibenring und der Achse bewirkt. Der Topf kann dabei mit dem Bremsscheibenring einstückig ausgeführt sein, insbesondere aus gleichartigem Material, mit ihm direkt verbunden sein, mit ihm verschweißt sein, oder durch mechanische Befestigungsmittel wie Schrauben, Bolzen oder Niete mit ihm verbunden sein. Das Material des Topfes kann ein Metall sein, bevorzugt Edelstahl, Titan, Aluminium, oder Legierungen, die einen Massenanteil von mindestens 20 % eines dieser Metalle enthalten. Ist der Bremsscheibenring aus einem keramischen Material, so ist es auch bevorzugt, ebenfalls den Topf aus einem keramischen Material, insbesondere eine artgleichen Material, auszuführen.

Die Perforationsbohrungen weisen üblicherweise Durchmesser von ca. 2 mm bis ca. 12 mm auf, bevorzugt sind Bereiche von 3 mm bis 10 mm, und insbesondere von 4 mm bis 9 mm. Soweit Perforationsbohrungen mit unterschiedlichen Durchmessern vorliegen, beträgt der Abstand zwischen zwei unmittelbar benachbarten Perforationsbohrungen bevorzugt mindestens den Durchmesser der größeren Perforationsbohrung.

Es ist weiter bevorzugt, die Perforationsbohrungen im wesentlichen gleichmäßig über die Reibfläche zu verteilen. Dabei bleiben bevorzugt die Randbereiche, also die Bereiche am Innenrand und am Außenrand der Kreisringscheibe, von Perforationsbohrungen frei. Als Randbereich wird dabei ein Kreisring bezeichnet, der eine radiale Erstreckung von dem zweifachen des mittleren Durchmessers aller Perforationsbohrungen in Richtung auf das Innere der Kreisringscheibe aufweist. Eine Verteilung wird als "im wesentlichen gleichmäßig" bezeichnet, wenn die Anzahl der Perforationsbohrungen bezogen auf die Länge des mittleren Durchmessers einer Ringzone (die von einem inneren und von einem äußeren Durchmesser begrenzt ist) in allen Ringzonen mit gleicher Differenz der Innen- und Außenradien, wobei diese Differenz bevorzugt zwischen dem zweifachen und dem fünffachen, besonders bevorzugt zwischen den dreifachen und dem vierfachen, des mittleren Durchmessers aller Perforationsbohrungen beträgt, von derartigen Kreisringscheiben sich um nicht mehr als 80 %, bevorzugt nicht mehr als 50 %, und besonders bevorzugt nicht mehr als 30 % des höchsten Wertes unterscheidet.

Es ist erfindungsgemäß auch bevorzugt, einen Teil der Perforationsbohrungen, bevorzugt mindestens 5 % aller Perforationsbohrungen, in den Bereich der Rippen zu legen. Dabei verläuft die betreffende Perforationsbohrung zu mindestens 30 % ihrer Querschnittsfläche innerhalb einer Rippe.

Die Vorteile, der mit einer Anordnung der Perforationsbohrungen gemäß der Erfindung erreicht werden kann, sind insbesondere Vermeidung von lokaler Überhitzung der Bremsscheibe beim Bremsvorgang durch die Reibungswärme und Verhinderung des Aufbaus eines den Reibwert reduzierenden Nässefilmes auf der Reibfläche.

In den Untersuchungen, die Grundlage der vorliegenden Erfindung waren, wurde festgestellt, dass durch die Bedingung des maximalen Abstandes zweier benachbarter Perforationsbohrungen und dem Einbringen von Perforationsbohrungen außerhalb desjenigen Bereichs der Bremsscheibe, der von den Bremsklötzen überstrichen wird, die Aufheizung der Bremsscheibe beim (Brems-)Betrieb um 20 K bis 50 K verringert werden konnte gegenüber Scheiben, bei denen der Abstand zwischen zwei benachbarten Perforationsbohrungen stets mehr als 30 mm betrug, und die keine Bohrungen außerhalb derjenigen Fläche der Bremsscheibe aufwiesen, die im reibenden Eingriff mit den auf den Bremsklötzen befestigten Reibbelägen stand. Weiter wurde festgestellt, dass der Verschleiß der Reibbeläge auf den Bremsklötzen stark zunahm, wenn ein Mindestabstand zwischen jeweils zwei benachbarten Perforationsbohrungen unterschritten wurde, der das Doppelte des mittleren Durchmessers der betrachteten Perforationsbohrungen unterschritt. Dies äußerte sich zusätzlich in einem verminderten Bremskomfort durch zunehmende Geräuschentwicklung. Es ist daher wichtig, beide Schranken für den Abstand von benachbarten Perforationsbohrungen zu beachten.

Weisen die benachbarten Perforationsbohrungen unterschiedliche Durchmesser auf, so ergab sich ein besonders günstiges Bremskomfort-Verhalten bei verminderter Aufheizung und verbessertem Nassansprechverhalten, wenn der Abstand zwischen den zwei benachbarten Perforationsbohrungen mindestens das Eineinhalbfache des Durchmessers der größeren Bohrung betrug. In diesem Fall erwies es sich weiter als günstig, den Maximalabstand auf das Doppelte der Summe der Durchmesser der beiden betrachteten Perforationsbohrungen zu beschränken, wobei 30 mm jedoch nicht überschritten werden dürfen.

Besonders vorteilhaft sind die gemäß der Erfindung angeordneten Perforationsbohrungen bei Bremsscheiben aus faserverstärkten keramischen Werkstoffen, insbesondere solchen aus mit Fasern aus Kohlenstoff verstärkten keramischen Bremsscheiben, deren Matrix im wesentlichen Siliciumcarbid sowie Silicium und Kohlenstoff enthält. Derartige Bremsscheibenringe weisen mindestens drei Schichten auf, wobei die äußeren Schichten als Reibschichten bezüglich ihres tribologischen Verhaltens optimiert sind, und die innere Schicht die mechanische Festigkeit bewirkt und zur Kühlung durch darin vorgesehene Kühlkanäle beiträgt. Dabei kann die innere Schicht in drei Zonen unterteilt sein, wobei die innerste Schicht Kühlkanäle und Rippen enthält, die die anschließenden Schichten verbinden, und die zwischen dieser innersten Schicht und den Reibschichten angeordneten Schichten die Festigkeitsträger bilden. Üblicherweise wird im Fall von faserverstärkten keramischen Werkstoffen die stoffliche Zusammensetzung der Reibschicht unterschiedlich sein von der der genannten inneren Schichten.

In diesem Fall hat es sich als besonders günstig erwiesen, die Perforationsbohrungen im sogenannten vorkeramischen Zustand einzubringen, also vor der Umwandlung von Kohlenstoff aus der Matrix des Vorkörpers in Siliciumcarbid durch Infiltration des porösen Körpers mit flüssigem Silicium und nachfolgenden Reaktion. In diesem sogenannten CFC-Zustand, in dem der Körper aus mit Fasern aus Kohlenstoff verstärktem porösem Kohlenstoff besteht, lässt sich der Körper leicht durch Bohren oder Drehen oder Fräsen bearbeiten, es ergibt sich dadurch eine technisch einfache und wirtschaftlich günstige Bearbeitung.

## Patentansprüche

1. Bremsscheibenringe, die Perforationsbohrungen senkrecht zur Ebene der Reibflächen aufweisen, **dadurch gekennzeichnet, dass** die Perforationsbohrungen von ihren nächsten Nachbarn jeweils einen Abstand aufweisen, der stets höchstens 30 mm und im Mittel mindestens das Doppelte des mittleren Bohrungsdurchmessers beträgt.

2. Bremsscheibenringe nach Anspruch 1, **dadurch gekennzeichnet, dass** die Perforationsbohrungen zylinderförmig ausgestaltet sind.

3. Bremsscheibenringe nach einem oder mehreren der Ansprüche 1 bis 2, **dadurch gekennzeichnet, dass** Perforationsbohrungen mit unterschiedlichen Durchmessern vorliegen, und der Abstand zwischen zwei unmittelbar benachbarten Perforationsbohrungen unterschiedlichen Durchmessers mindestens den Durchmesser der größeren Perforationsbohrung beträgt.

4. Bremsscheibenringe nach einem oder mehreren der Ansprüche 1 bis 3, **dadurch gekennzeichnet, dass** die Perforationsbohrungen im wesentlichen gleichmäßig über die Reibfläche verteilt sind, wobei die Anzahl der Perforationsbohrungen bezogen auf die Länge des mittleren Durchmessers einer Ringzone, die von einem inneren und von einem äußeren Durchmesser begrenzt ist, in allen Ringzonen mit gleicher Differenz der Innen- und Außenradien, die zwischen dem zweifachen und dem fünffachen des mittleren Durchmessers aller Perforationsbohrungen beträgt, sich um nicht mehr als 80 % des höchsten Wertes unterscheidet, und wobei die Ringzonen am inneren und äußeren Rand, die keine Perforationsbohrungen aufweisen, außer Betracht bleiben.

5. Bremsscheibenringe nach einem oder mehreren der Ansprüche 1 bis 4, **dadurch gekennzeichnet, dass** sie aus mindestens drei Schichten bestehen, wobei die beiden äußeren Schichten als Reibschichten beim Bremsvorgang im tribologischen Kontakt mit den Reibbelägen der Bremsklötze stehen, und die innerste Schicht aus Rippen besteht, die die beiden nach außen anschließenden Schichten verbinden, und die Kühlkanäle einschließen, und wobei mindestens ein Anteil von 5 % aller Perforationsbohrungen im Bereich der Rippen liegt.

6. Bremsscheibenringe nach einem oder mehreren der Ansprüche 1 bis 5, **dadurch gekennzeichnet, dass** sie aus faserverstärkten keramischen Werkstoffen bestehen.

7. Bremsscheibenringe nach Anspruch 6, **dadurch gekennzeichnet, dass** sie Perforationsbohrungen aufweisen, die zumindest teilweise im präkeramischen Zustand eingebracht wurden.

8. Bremsscheiben umfassend Bremsscheibenringe nach Anspruch 6 oder 7.

9. Bremsscheiben nach Anspruch 8, **dadurch gekennzeichnet, dass** die Bremsscheibenringe durch einen Bremsscheibentopf kraftschlüssig mit einer Achse verbunden sind.

10. Bremsscheiben nach Anspruch 9, **dadurch gekennzeichnet, dass** die Verbindung durch Ausführen von Bremsscheibenring und Bremsscheibentopf aus einem Stück, durch Verschweißen von Bremsscheibenring und Bremsscheibentopf, oder durch Verbinden von Bremsscheibenring und Bremsscheibentopf mittels Verbindungselementen ausgewählt aus Schrauben und Muttern, Bolzen und Nieten hergestellt ist.

11. Bremssysteme umfassend Bremsklötze mit Reibbelägen und Bremsscheiben gemäß einem der Ansprüche 8 bis 10.

## Claims

1. Brake disk rings which have perforation drill holes perpendicular to the plane of the frictional surfaces, **characterised in that** the perforation drill holes each have a separation from their nearest neighbours which is always no greater than 30 mm and is on average at least double the mean drill hole diameter.

2. Brake disk rings according to claim 1, **characterised in that** the perforation drill holes are configured cylindrical.

3. Brake disk rings according to one or more of the claims 1 to 2, **characterised in that** the perforation drill holes are present with different diameters and the separation between two directly adjacent perforation drill holes with different diameters is no less than the diameter of the largest perforation drill hole.

4. Brake disk rings according to one or more of the claims 1 to 3, **characterised in that** the perforation drill holes are essentially evenly distributed over the frictional surface, wherein the number of perforation drill holes relative to the length of the mean diameter of a ring zone which is delimited by an inner diameter and an outer diameter, differs in all the ring zones which have the same difference between their inner and outer radii, said difference amounting to between twice and five times the mean diameter of all the perforation drill holes, by not more than 80% of the greatest value, wherein the ring zones at the inner and outer edge which have no perforation drill holes are left out of consideration.

5. Brake disk rings according to one or more of the claims 1 to 4, **characterised in that** they comprise at least three layers wherein the two outer layers are in tribological contact with the frictional coatings of the brake shoes as frictional layers during the braking process, and the innermost layer comprises ribs which connect the two outwardly adjoining layers and enclose the cooling channels, and wherein a proportion of at least 5% of all the perforation drill holes lies in the region of the ribs.

6. Brake disk rings according to one or more of the claims 1 to 5, **characterised in that** they comprise fibre-reinforced ceramic materials.

7. Brake disk rings according to claim 6, **characterised in that** said brake disk rings have perforation drill holes which were at least partially introduced in the preceramic state.

8. Brake disks comprising brake disk rings according to claim 6 or 7.

9. Brake disks according to claim 8, **characterised in that** the brake disk rings are frictionally connected to an axle by means of a brake disk pot.

10. Brake disks according to claim 9, **characterised in that** the connection is manufactured by producing the brake disk ring and the brake disk pot from one piece, by welding the brake disk ring and the brake disk pot or by connecting the brake disk ring and the brake disk pot by means of connecting elements selected from screws and nuts, bolts and rivets.

11. Braking systems comprising brake shoes with frictional coatings and brake disks according to one of the claims 8 to 10.

## Revendications

1. Anneaux de frein à disque, qui présentent des alésages de perforation perpendiculaires au plan des surfaces de friction, **caractérisés en ce que** les alésages de perforation présentent respectivement une distance par rapport à leurs voisins les plus proches, qui est toujours de 30 mm au maximum et en moyenne d'au moins le double du diamètre d'alésage moyen.

2. Anneaux de frein à disque selon la revendication 1, **caractérisés en ce que** les alésages de perforation sont réalisés de manière cylindrique.

3. Anneaux de frein à disque selon une ou plusieurs des revendications 1 à 2, **caractérisés en ce qu'**il y a des alésages de perforation de différents diamètres et la distance entre deux alésages de perforation directement voisins de diamètre différent est au moins égale au diamètre du plus grand alésage de perforation.

4. Anneaux de frein à disque selon une ou plusieurs des revendications 1 à 3, **caractérisés en ce que** les alésages de perforation sont répartis de manière essentiellement homogène sur la surface de friction, le nombre d'alésages de perforation par rapport à la longueur du diamètre moyen d'une zone annulaire, qui est délimitée par un diamètre intérieur et par un diamètre extérieur, dans toutes les zones annulaires avec la même différence entre les rayons intérieur et extérieur, qui est comprise entre deux et cinq fois le diamètre moyen de tous les alésages de perforation, différant de pas plus de 80 % de la valeur maximale et les zones annulaires sur le bord intérieur et extérieur, qui ne présentent pas d'alésages de perforation, n'entrant pas en considération.

5. Anneaux de frein à disque selon une ou plusieurs des revendications 1 à 4, **caractérisés en ce qu'**ils se composent d'au moins trois couches, les deux couches extérieures sous forme de couches de friction étant en contact tribologique avec les garnitures de friction des plaquettes de frein lors du freinage, et la couche la plus à l'intérieur se composant de nervures, qui relient les deux couches faisant suite vers l'extérieur et comprennent les canaux de refroidissement et au moins une part de 5 % de tous les alésages de perforation se situant dans la zone des nervures.

6. Anneaux de frein à disque selon une ou plusieurs des revendications 1 à 5, **caractérisés en ce qu'**ils se composent de matériaux céramiques renforcés par fibres.

7. Anneaux de frein à disque selon la revendication 6, **caractérisés en ce qu'**ils présentent des alésages de perforation qui ont été réalisés au moins en partie à l'état précéramique.

8. Disques de frein comprenant des anneaux de frein à disque selon la revendication 6 ou 7.

9. Disques de frein selon la revendication 8, **caractérisés en ce que** les anneaux de frein à disque sont reliés à un essieu par liaison de force par une cloche de disque de frein.

10. Disques de frein selon la revendication 9, **caractérisés en ce que** la liaison est établie par réalisation de l'anneau de frein à disque et de la cloche de disque de frein d'un seul tenant, par soudage de l'anneau de frein à disque et de la cloche de disque de frein ou par assemblage de l'anneau de frein à disque et de la cloche de disque de frein à l'aide d'éléments d'assemblage choisis parmi les vis et les écrous, les boulons et les rivets.

11. Systèmes de freinage comprenant des plaquettes de frein avec des garnitures de friction et des disques de frein selon l'une quelconque des revendications 8 à 10.
